# EUROPEAN PATENT APPLICATION

(11) **EP 3 621 242 A1**
(43) Date of publication of application: **11.03.2020**
(21) Application number: 18192770.8
(22) Date of filing: 05.09.2018
(51) Int. Cl.: H04L 12/24, H04L 12/26

(54) **METHOD FOR AN AUTONOMIC OR AI-ASSISTED VALIDATION OR DECISION MAKING REGARDING NETWORK PERFORMANCE OF A TELECOMMUNICATIONS NETWORK AND/OR FOR AN AUTONOMIC OR AI-ASSISTED TROUBLESHOOTING OR PERFORMANCE ENHANCEMENT WITHIN A TELECOMMUNICATIONS NETWORK, TELECOMMUNICATIONS NETWORK, SYSTEM, MACHINE INTELLIGENCE ENTITY, VISUALIZATION INTERFACE, COMPUTER PROGRAM AND COMPUTER-READABLE MEDIUM**

(71) Applicant: Deutsche Telekom AG, 53113 Bonn (DE)
(72) Inventor: DUKIC, Zlatko, 90491 Nürnberg (DE); BUREK, Dunja, 90409 Nürnberg (DE)
(74) Representative: Schwöbel, Thilo K.

(57) **Abstract**

The invention relates to a method for an autonomic or AI-assisted validation or decision making regarding network performance of a telecommunications network and/or for an autonomic or AI-assisted troubleshooting or performance enhancement within a telecommunications network, wherein the telecommunications network comprises a plurality of network nodes, interacting, at least partly, with each other,
wherein network data regarding the telecommunications network and/or data derived thereof are collected and stored in a data storage repository and the network data and/or data derived thereof are able to be analyzed, and the network data and/or data derived thereof are able to be visualized using a visualization interface,
wherein autonomic or AI-assisted validation or decision making and/or autonomic or AI-assisted troubleshooting or performance enhancement is applied using a machine intelligence entity, the machine intelligence entity using at least part of the network data and/or data derived thereof as well as machine learning models to provide an AI-assisted output,
wherein the method comprises the following steps:
-- in a first step, the network data and/or data derived thereof are collected and stored in the data storage repository, the network data and/or data derived thereof being organized to allow real-time stream processing and/or historical replay,
-- in a second step, the machine intelligence entity is provided with at least a part of the network data and/or data derived thereof, wherein at least
-- a machine learning approach, and
-- a state machine-based approach

are used to realize anomaly recognitions and/or call flow evaluations and/or root cause analysis in case of detected issues within the telecommunications network,
wherein by continuously or iteratively performing the first and second step, the AI-assisted output is generated by the machine intelligence entity, and
wherein the AI-assisted output of the machine intelligence entity comprises information elements being able to be used to validate or to make a decision regarding network performance and/or to troubleshoot or to enhance the performance of the telecommunications network, or wherein the AI-assisted output of the machine intelligence entity allows for validating or decision making regarding network performance and/or for troubleshooting or performance enhancement within the telecommunications network.

## Description

### BACKGROUND

The present invention relates to a method for an autonomic or Al-assisted validation or decision making regarding network performance of a telecommunications network and/or for an autonomic or Al-assisted troubleshooting or performance enhancement within a telecommunications network, wherein the telecommunications network comprises a plurality of network nodes, interacting, at least partly, with each other, wherein network data regarding the telecommunications network and/or data derived thereof are collected and stored in a data storage repository and the network data and/or data derived thereof are able to be analyzed and the network data and/or data derived thereof are able to be visualized using a visualization interface.

Furthermore, the present invention relates to a corresponding telecommunications network for an autonomic or Al-assisted validation or decision making regarding network performance of the telecommunications network and/or for an autonomic or Al-assisted troubleshooting or performance enhancement within the telecommunications network, wherein the telecommunications network comprises a plurality of network nodes, interacting, at least partly, with each other, wherein the telecommunications network comprises or is associated with a data storage repository and a machine intelligence entity, wherein network data regarding the telecommunications network and/or data derived thereof are collected and stored in the data storage repository and the network data and/or data derived thereof are able to be analyzed and the network data and/or data derived thereof are able to be visualized using a visualization interface.

Additionally, the present invention relates to a corresponding system for an autonomic or Al-assisted validation or decision making regarding network performance of a telecommunications network and/or for an autonomic or Al-assisted troubleshooting or performance enhancement within a telecommunications network, wherein the system comprises the telecommunications network and the telecommunications network comprises a plurality of network nodes, interacting, at least partly, with each other, wherein the system comprises a data storage repository and a machine intelligence entity, wherein network data regarding the telecommunications network and/or data derived thereof are collected and stored in the data storage repository and the network data and/or data derived thereof are able to be analyzed and the network data and/or data derived thereof are able to be visualized using a visualization interface.

Furthermore, the present invention relates to a machine intelligence entity and/or a visualization interface in a corresponding telecommunications network or in a corresponding system and to a corresponding computer program and computer-readable medium to perform the inventive method.

Conventionally known telecommunications networks - be it mobile communication networks or fixed line telecommunications network or hybrid networks comprising parts or components of mobile communication networks and fixed line telecommunications networks - typically consist of a number of network nodes, each of network nodes running one or more functions or functionalities, typically in order to provide communication services to users of the telecommunications network or to nodes, components or parts thereof. Such communication services typically include call services such as telephone functions or functionalities, video call functions or functionalities, or messaging functions or functionalities, and the involved network nodes of such telecommunications networks, especially within an IP multimedia subsystem (IMS) network, typically include network nodes such as S-CSCF (serving call state control function), iBCF (interconnection border control function), etc.

Constant improvements in software and hardware within such a telecommunications network introduce the necessity for frequent validation. Validation can be targeted towards a single network node, to a plurality of network nodes, or to the telecommunications network (such as an IMS network or system) as a whole.

Validation of the telecommunications network as a whole (i.e. validation of the complete system or platform) - also called end-to-end testing - may be concerned with either only a single function verification, or testing various specifics or characteristics of the telecommunications network under load. Single function verification is usually carried out with a single or few validation calls or validation (or test) operations, while load tests are run with thousands or even much more of such validation operations (or test operation), especially validation calls, in an attempt to simulate a realistic usage of the telecommunications network or network load.

Especially in case of failures of such validation operations (or test operations), it is important to identify the reasons for such failures. Likewise, even in case of successfully performing validation operations, it is typically important to identify correctness of all elements of the operation, single points of failure or bottlenecks within the telecommunications network. However, such root cause analysis typically requires a lot of efforts and is notoriously time-consuming, especially in case it is to be performed for a comparatively large number of individual situations of validation operations (or test operations).

### SUMMARY

An object of the present invention is to provide a comparatively simple and efficient method for an autonomic or Al-assisted (artificial intelligence-assisted) validation, decision making, troubleshooting and/or performance enhancement within a telecommunications network such that performing validation operations (or test operations), even though comprising a comparatively large number of individual validation operations (or test operations) is able to be performed comparatively quickly and easily, and according to a comparatively systematic or coherent manner.

The object of the present invention is achieved by a method for an autonomic or Al-assisted validation or decision making regarding network performance of a telecommunications network and/or for an autonomic or Al-assisted troubleshooting or performance enhancement within a telecommunications network, wherein the telecommunications network comprises a plurality of network nodes, interacting, at least partly, with each other,
wherein network data regarding the telecommunications network and/or data derived thereof are collected and stored in a data storage repository and the network data and/or data derived thereof are able to be analyzed and the network data and/or data derived thereof are able to be visualized using a visualization interface,
wherein autonomic or Al-assisted validation or decision making and/or autonomic or Al-assisted troubleshooting or performance enhancement is applied using a machine intelligence entity, the machine intelligence entity using at least part of the network data and/or data derived thereof as well as machine learning models to provide an Al-assisted output,
wherein the method comprises the following steps:
-- in a first step, the network data and/or data derived thereof are collected and stored in the data storage repository, the network data and/or data derived thereof being organized to allow real-time stream processing and/or historical replay,
-- in a second step, the machine intelligence entity is provided with at least a part of the network data and/or data derived thereof, wherein at least
   -- a machine learning approach, and
   -- a state machine-based approach
are used to realize anomaly recognitions and/or call flow evaluations and/or root cause analysis in case of detected issues within the telecommunications network,
wherein by continuously or iteratively performing the first and second step, the Al-assisted output is generated by the machine intelligence entity, and
wherein the Al-assisted output of the machine intelligence entity comprises information elements being able to be used to validate or to make a decision regarding network performance and/or to troubleshoot or to enhance the performance of the telecommunications network, or wherein the Al-assisted output of the machine intelligence entity allows for validating or decision making regarding network performance and/or for troubleshooting or performance enhancement within the telecommunications network.

According to the present invention, an autonomic and/or Al-assisted method for validation and/or troubleshooting in the telecommunication networks is proposed. Thereby, it is advantageously possible to provide improvements, especially in the validation process of telecommunication networks, by means of utilizing a comparatively high degree of autonomic decision making by means of artificial intelligence. In the context of the present invention, it is proposed to apply the inventive method in order to provide an autonomic or Al-assisted (or, rather, autonomic and/or Al-assisted) validation or decision making regarding network performance of a telecommunications network. Alternatively or cumulatively, it is proposed to apply the inventive method in order to provide for an autonomic or Al-assisted (or, rather, autonomic and/or Al-assisted) troubleshooting or performance enhancement within a telecommunications network. In this respect, autonomic and/or Al-assisted is intended to mean, on the one side of the spectrum of possible realizations, an approach relying in comparatively large parts on human involvement and decision making and essentially only being Al-assisted (i.e. not fully autonomic), and, on the other side of the spectrum of possible realizations, an approach either relying not at all or only in comparatively small parts on human involvement and decision making and essentially operating autonomously (albeit, perhaps, not in a fully autonomic manner). Hence, the application of machine intelligence will be implemented over time and has to be supported by human experts in order to learn and gain experience. Therefore, according to the present invention, a solution is especially provided to allow for an efficient involvement of human experts, such that close collaboration is possible. This allows interaction where both human and machine agents are closely collaborating, the goal being to build machine knowledge and skills in order to relieve humans from low-level operations and allow them to concentrate on the high level objectives where genuine human intelligence is irreplaceable. Hence, according to the present invention, a process is proposed to allow for a more and more autonomic validation, decision making, troubleshooting and/or performance enhancement within a telecommunications network.

The telecommunications network according to the present invention comprises a plurality of network nodes, interacting, at least partly, with each other. Furthermore according to the present invention, network data regarding the telecommunications network (and/or data derived thereof) are collected and stored in a data storage repository and the network data (and/or data derived thereof) are able to be analyzed and the network data (and/or data derived thereof) are preferably visualized using a visualization interface.

According to the present invention, a machine intelligence entity is used to provide an autonomic or Al-assisted validation or decision making and/or autonomic or Al-assisted troubleshooting or performance enhancement, the machine intelligence entity using at least part of the network data (and/or data derived thereof) as well as machine learning models to provide an Al-assisted output.
In a first step of the inventive method, the network data (and/or data derived thereof) are collected and stored in the data storage repository, the network data and/or data derived thereof being organized to allow real-time stream processing and/or historical replay; in a second step, the machine intelligence entity is provided with at least a part of the network data and/or data derived thereof, wherein at least a machine learning approach, and a state machine-based approach are used to realize anomaly recognitions and/or call flow evaluations and/or root cause analysis in case of detected issues within the telecommunications network.
By continuously or iteratively performing the first and second step, the Al-assisted output is generated by the machine intelligence entity, and
-- the Al-assisted output of the machine intelligence entity comprises information elements being able to be used to validate or to make a decision regarding network performance and/or to troubleshoot or to enhance the performance of the telecommunications network (i.e. the Al-assisted output provides information and/or hints for the operator in the sense that the Al-generated information and/or hints do not validate and/or make the decision and/or troubleshoot and/or enhance network performance themselves, i.e. autonomously, but this is done by the (human) operator), or
-- the Al-assisted output of the machine intelligence entity allows for validating or decision making regarding network performance and/or for troubleshooting or performance enhancement within the telecommunications network (the Al-assisted output allows for or does the validation and/or makes the decision and/or troubleshoots and/or enhances network performance, essentially without a human operator).

According to a preferred embodiment of the present invention, the method comprises the further step of visualizing at least part of the network data and/or data derived thereof by means of a graphical representation of a current status or a status at a specific point in time of the telecommunications network or of network nodes thereof, the graphical representation especially including time-series visualization leading up to a current status or a status at a specific point in time of the telecommunications network, wherein the graphical representation especially corresponds to an at least three-dimensional representation, and especially visually immersing a human expert in real-time in a current status or a status at a specific point in time of the telecommunications network or of network nodes thereof.

By means of providing a graphical representation of a current status or a status at a specific point in time of the telecommunications network or of network nodes thereof, a visualizing of at least part of the network data and/or data derived thereof is possible such that human experts are provided - preferably at a glance of by means of comparatively few interactions with the graphical representation and/or the visualization interface - with a deep insight in "what is going on in the telecommunications network" by immersion into an interactive tailor-made virtual world (high-tech dashboard), where the situation of the telecommunications network is represented in a highly immersed manner. This allows interaction where both human and machine agents are closely collaborating, the goal being to build machine knowledge and skills such that progressively it is possible to relieve humans from low-level operations and allow them to concentrate on the high level objectives where genuine human intelligence is irreplaceable.

According to further preferred embodiments according to the present invention, the network data and/or data derived thereof are organized such that real-time stream processing is able to be performed using efficient data pipeline combined with multi-layer storage for quick retrieval and batch processing, especially iteratively optimized based on retrieval pattern,
wherein the network data and/or data derived thereof especially comprise one or a plurality out of the following:
-- at least part of the messages exchanged between the network nodes of the telecommunications network,
-- data derived from such exchanged messages according to various different types of messages within the telecommunications network and their subsets based on at least part of the content, especially providing:
   -- indications regarding the number of such messages per time interval,
   -- delta time measurement between progressing messages in the flow and/or messages belonging to the same request/response process,
   -- audio quality indicators, especially jitter, delay and quality of media
   -- call flow evaluation data, especially obtained using a state-machine model regarding the processing of a call within the telecommunications network,
-- system log data of at least part of the network nodes of the telecommunications network,
-- application log data of at least part of the network nodes of the telecommunications network,
-- key performance indicators of at least part of the network nodes of the telecommunications network,
-- the message content of descriptions of errors encountered by users.

It is thereby advantageously possible according to the present invention to provide, generate and recognize detailed information or parameters - either as part of the network data and/or of data derived thereof, or as part of system log data, application log data, key performance indicators, descriptions of errors encountered by users - such that relevant patterns are able to be detected by the machine intelligence entity.

According to still further preferred embodiments according to the present invention, the network nodes are interacting with each other within the telecommunications network, especially to provide communication services to users of the telecommunications network, wherein the telecommunications network especially comprises an access network and a core network and/or wherein network nodes especially operate on different layers of the telecommunications network.

It is thereby advantageously possible to provide an operational telecommunications network being able to serve the communication needs of its users and/or customers.

According to still further preferred embodiments according to the present invention, in the second step, the machine intelligence entity - besides using a machine learning approach, and a state machine-based approach - uses
-- supervised learning through human interaction, especially in view of performing validation and/or troubleshooting, and/or
-- unsupervised learning for detecting anomalies and/or clustering features and/or,
-- expert system knowledge or expert system information, especially for decision making, based on dynamically updated ontologies or semantic knowledge containing applicable domain knowledge.

It is thereby advantageously possible to realize a higher degree of autonomous behavior according to the inventive method or by a system or a telecommunications network according to the present invention.

According to still further preferred embodiments according to the present invention, by means of the machine intelligence entity, an autonomic agent is realized by means of which an autonomic validation is performed, especially root cause analysis in case of failure and/or comprising concluding about the success or the failure of a process or an action within the telecommunications network.

It is thereby advantageously possible to render the validation process of modifications regarding hardware and/or software within the telecommunications network less cumbersome and more efficient to be conducted by means of greatly enhancing (and accelerating in terms of required time) the validation process or the procedures to validate such modifications or changes within the telecommunications network.

Additionally, the invention relates to and the object of the present invention is achieved by a telecommunications network for an autonomic or Al-assisted validation or decision making regarding network performance of the telecommunications network and/or for an autonomic or Al-assisted troubleshooting or performance enhancement within the telecommunications network, wherein the telecommunications network comprises a plurality of network nodes, interacting, at least partly, with each other, wherein the telecommunications network comprises or is associated with a data storage repository and a machine intelligence entity, wherein network data regarding the telecommunications network and/or data derived thereof are collected and stored in the data storage repository and the network data and/or data derived thereof are able to be analyzed and the network data and/or data derived thereof are able to be visualized using a visualization interface, wherein autonomic or Al-assisted validation or decision making and/or autonomic or Al-assisted troubleshooting or performance enhancement is applied using the machine intelligence entity, the machine intelligence entity using at least part of the network data and/or data derived thereof as well as machine learning models to provide an Al-assisted output, wherein the telecommunications network is configured such that:
-- the network data and/or data derived thereof are collected and stored in the data storage repository, the network data and/or data derived thereof being organized to allow real-time stream processing and/or historical replay,
-- the machine intelligence entity is provided with at least a part of the network data and/or data derived thereof, wherein at least
   -- a machine learning approach, and
   -- a state machine-based approach
are used to realize anomaly recognitions and/or call flow evaluations and/or root cause analysis in case of detected issues within the telecommunications network,
wherein the telecommunications network is furthermore configured such that by continuously or iteratively collecting and storing the network data and/or data derived thereof in the data storage repository and providing the machine intelligence entity with at least a part of the network data and/or data derived thereof, the Al-assisted output is generated by the machine intelligence entity, and
wherein the Al-assisted output of the machine intelligence entity comprises information elements being able to be used to validate or to make a decision regarding network performance and/or to troubleshoot or to enhance the performance of the telecommunications network, or wherein the Al-assisted output of the machine intelligence entity allows for validating or decision making regarding network performance and/or for troubleshooting or performance enhancement within the telecommunications network.

By means of the inventive telecommunications network, it is thereby advantageously possible to provide improvements, especially in the validation process of telecommunication networks, by means of utilizing a comparatively high degree of autonomic decision making by means of artificial intelligence.

Additionally, the object of the present invention is achieved by and the invention relates to a system for an autonomic or Al-assisted validation or decision making regarding network performance of a telecommunications network and/or for an autonomic or Al-assisted troubleshooting or performance enhancement within a telecommunications network, wherein the system comprises the telecommunications network and the telecommunications network comprises a plurality of network nodes, interacting, at least partly, with each other, wherein the system comprises a data storage repository and a machine intelligence entity, wherein network data regarding the telecommunications network and/or data derived thereof are collected and stored in the data storage repository and the network data and/or data derived thereof are able to be analyzed and the network data and/or data derived thereof are able to be visualized using a visualization interface,
wherein autonomic or Al-assisted validation or decision making and/or autonomic or Al-assisted troubleshooting or performance enhancement is applied using the machine intelligence entity, the machine intelligence entity using at least part of the network data and/or data derived thereof as well as machine learning models to provide an Al-assisted output,

wherein the system is configured such that:
-- the network data and/or data derived thereof are collected and stored in the data storage repository, the network data and/or data derived thereof being organized to allow real-time stream processing and/or historical replay,
-- the machine intelligence entity is provided with at least a part of the network data and/or data derived thereof, wherein at least
   -- a machine learning approach, and
   -- a state machine-based approach
are used to realize anomaly recognitions and/or call flow evaluations and/or root cause analysis in case of detected issues within the telecommunications network,
wherein the system is furthermore configured such that by continuously or iteratively collecting and storing the network data and/or data derived thereof in the data storage repository and providing the machine intelligence entity with at least a part of the network data and/or data derived thereof, the Al-assisted output is generated by the machine intelligence entity, and
wherein the Al-assisted output of the machine intelligence entity comprises information elements being able to be used to validate or to make a decision regarding network performance and/or to troubleshoot or to enhance the performance of the telecommunications network, or wherein the Al-assisted output of the machine intelligence entity allows for validating or decision making regarding network performance and/or for troubleshooting or performance enhancement within the telecommunications network.

By means of the inventive system, it is thereby advantageously possible to provide improvements, especially in the validation process of telecommunication networks, by means of utilizing a comparatively high degree of autonomic decision making by means of artificial intelligence.

Additionally, the present invention relates to an inventive telecommunications network or an inventive system, wherein the telecommunications network or the system comprises a visualization interface, wherein the visualization interface is configured such that the network data and/or data derived thereof are visualized by means of a graphical representation of a current status or a status at a specific point in time of the telecommunications network or of network nodes thereof, the graphical representation especially including time-series visualization leading up to a current status or a status at a specific point in time of the telecommunications network, wherein the graphical representation especially corresponds to an at least three-dimensional representation, and especially visually immersing a human expert in real-time in a current status or a status at a specific point in time of the telecommunications network or of network nodes thereof.

By means of using a visualization interface within the telecommunications network or the system, it is advantageously possible that a visualizing of at least part of the network data (and/or data derived thereof) is possible such that human experts are provided with a deep insight in network processes of the telecommunications network.

Additionally, the object of the present invention is achieved by and the invention relates to a machine intelligence entity or a visualization interface used in an inventive telecommunications network or in an inventive system.

Additionally, the present invention relates to a computer program comprising a computer readable program code which, when executed on a computer or on one network node or a plurality of network nodes of a telecommunications network or on a machine intelligence entity or in part on one or a plurality of network nodes of a telecommunications network and in part on a machine intelligence entity, causes the computer or the network node or network nodes or the machine intelligence entity to perform a method as described before.

Furthermore, the present invention relates to a computer-readable medium comprising instructions which when executed on a computer or on one network node or a plurality of network nodes of a telecommunications network or on a machine intelligence entity or in part on one or a plurality of network nodes of a telecommunications network and in part on a machine intelligence entity, causes the computer or the network node or network nodes or the machine intelligence entity to perform a method as described before.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an embodiment of the inventive method and system according to the present invention, the system comprising a data storage repository, a machine intelligence entity, and a visualization interface.
Figure 2 schematically illustrates an embodiment of a telecommunications network according to the present invention, the telecommunications network comprising a plurality of network nodes.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

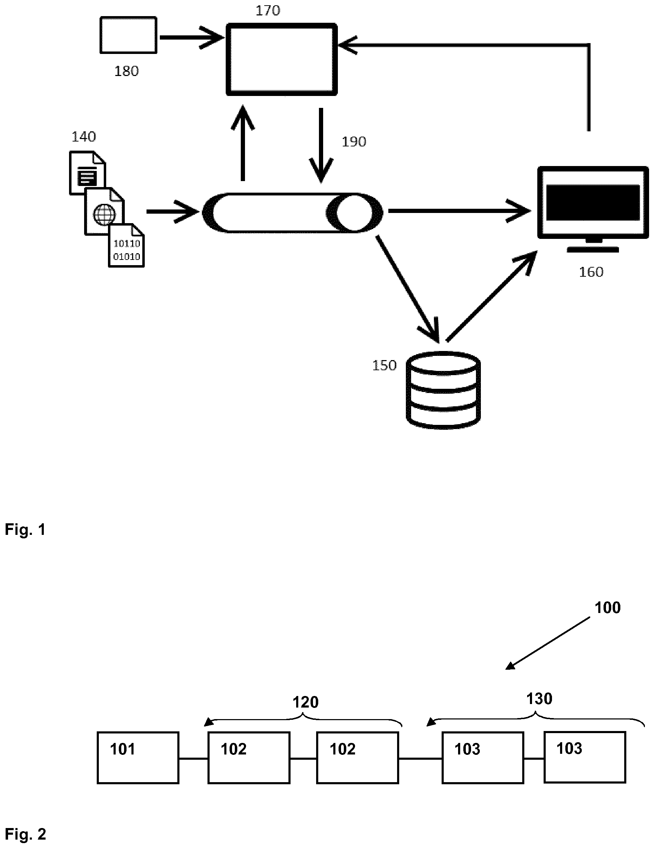

In Figure 1, an embodiment of the inventive method and system according to the present invention is schematically shown, the system comprising a data storage repository 150, a machine intelligence entity 170, and a visualization interface 160. It is to be understood that the embodiment shown in Figure 1 is only meant to be exemplarily.

In Figure 2, an embodiment of a telecommunications network 100 according to the present invention is schematically shown. Especially, the telecommunications network 100 comprises a plurality of network nodes 101, 102, 103, and the network nodes 101, 102, 103 are interacting with each other within the telecommunications network 100, especially to provide communication services to users of the telecommunications network 100. Typically, the telecommunications network 100 comprises an access network 120 (having access network nodes 102) and a core network 130 (having core network nodes 103). Other network nodes, such as end user network nodes 101 or user equipment nods 101 might also be present within the telecommunications network 100. Furthermore, the network nodes 101, 102, 103 typically operate on different layers of the telecommunications network 100.

Referring again to Figure 1, according to the present invention, network data 140 regarding the telecommunications network 100 (and/or data derived of these (raw) network data 140) are collected and stored in the data storage repository 150. It is furthermore preferred according to the present invention that a visualization interface 160 is present such that the network data 140 (and/or data derived of these (raw) network data 140) are able to be visualized using the visualization interface 160.

According to the present invention, the autonomic or Al-assisted validation or decision making and/or autonomic or Al-assisted troubleshooting or performance enhancement is applied using the machine intelligence entity 170, and the machine intelligence entity 170 uses at least part of the network data 140 (and/or data derived thereof) as well as machine learning models 180 to provide an Al-assisted output 190.

Within the telecommunications network 100, a constant stream of data are generated by the plurality of network nodes 101, 102, 103, e.g. messages exchanged between these network nodes 101, 102, 103. In the context of the present invention, these data are or this stream of data is referred to by the term network data 140. In addition to these rather raw network data, further network data and/or data derived from the network data 140 are generated. This stream of data, i.e. the network data 140 and/or data derived of these (raw) network data 140, is constantly fed - as part of a first step of the inventive method - into a data input interface or data pipeline, schematically represented by means of a pipe or tube element in the central part of Figure 1. According to the present invention, this network data 140 (or stream of network data 140) is organized to allow real-time stream processing and/or historical replay of such data. In this context, real-time stream processing of the network data 140 means that - starting from raw input data, e.g. raw data regarding communication messages exchanged between the different network nodes 101, 102, 103 - it is possible to directly (or by means of real-time processing) generate derived data, such as, e.g., the number of messages of a certain type or sub-type (of these communication messages) per time interval (e.g. per second). Real-time processing means that it is not necessary (in order to generate the derived data) to store such raw data in a repository or database and to perform database queries on such stored data. In addition (and also as part of the first step according of the inventive method), the network data 140 (and/or data derived thereof) are also collected and stored in the data storage repository 150.
In addition to feeding network data 140 (and/or data derived thereof) to the data pipeline (or data input interface), in a second step according to the inventive method, the machine intelligence entity 170 is provided with at least a part of the network data 140 (and/or data derived thereof), and a at least a machine learning approach, and a state machine-based approach are used to realize anomaly recognitions and/or call flow evaluations and/or root cause analysis in case of detected issues within the telecommunications network.

Preferably, the machine learning approach is realized by means of running a certain number of test calls or test operations within the telecommunications network 100 that could either succeed or fail. At a certain stage of ramping up the degree of autonomic behavior of the inventive telecommunications network or system, the information of whether a certain test call or test operation within the telecommunications network 100 has either been successful or whether it did fail is fed (in addition to the network data 140 (and/or data derived thereof) corresponding to the test calls or test operations) to the machine intelligence entity 170. After a sufficient number of training cases involving such test calls or test operations, the machine intelligence entity 170 is able, to detect - at least with a comparatively high probability - whether additional (or new) test calls or test operations within the telecommunications network 100 did either succeed or not. Hence, by means of using the machine learning approach, especially anomaly recognitions are possible to be performed within the machine intelligence entity 170.
Furthermore preferably, the state machine-based approach involves defining state machine model information regarding specific network operations or functionalities, such as, e.g., setting up calls or providing certain communication services within the telecommunications network 100, i.e. regarding such network operations or functionalities, the telecommunications network 100 (or at least one or a plurality of network nodes 101, 102, 103 thereof) is regarded as a state machine with a certain number of different states and transitions between such states. When using the state machine-based approach within the machine intelligence entity 170, different communication messages (exchanged between the network nodes 101, 102, 103) are able to be mapped (or assigned) to the different states of the considered state machine or to the transitions between such states, and a certain pattern of communication messages indicates a successful execution of a certain communication service or network operation or network functionality, whereas a certain other pattern of communication messages indicates an unsuccessful execution thereof. Hence, by means of using the state machine-based approach, especially call flow evaluations are possible to be performed within the machine intelligence entity 170.

According to the present invention, by continuously or iteratively performing the first and second step, the Al-assisted output 190 is generated by the machine intelligence entity such that it is possible to use this Al-assisted output 190 to validate or to make a decision regarding network performance and/or to troubleshoot or to enhance the performance of the telecommunications network.

Performing network testing of the telecommunications network 100 typically involves performing test calls or test operations, and as well validating them. Intuitively, a call success would be declared when the parties to the call hear each other, and call failure could, by intuition, also be self-explanatory: if a call cannot be established, one declares call failure. In the process of validation, successful call needs to be verified against the call flow, while in case of failure, a cause needs to be found. The process of identifying the cause of an issue is called troubleshooting, and troubleshooting relies a lot on data fusion, because a single data source may not provide sufficient information. A human expert approach would be to use all available relevant information, such as network trace, application and system logs, hardware info (CPU usage, MEM usage, ...), node performance counters, measured KPIs, various information from call generators and simulators, SNMP info, Call Records, etc. to understand where the failure is located and what is the cause of it - hence it is obvious that problem investigation requires strong multi-domain knowledge and excellent analytical skills.
According to the present invention, at least part thereof is performed by using the machine intelligence entity 170, and thereby using formally defined methods for computer aided validation and troubleshooting in telecommunications networks 100.

According to the present invention, data collection, processing and storage is provided such as to collect the network data 140 (and/or data derived thereof) in one place. The network data 140 come from a variety of sources, such as network traces, node application and system logs, system statistics, key performance indicators and performance measurements, SNMP traps, network traffic simulator/generator data, and Call Data Records (CDR/eCDR), and the data is organized to allow real-time stream processing, utilizing efficient data pipeline combined with multi-layer storage for quick retrieval and batch processing, which is adaptively optimized over time based on the retrieval patterns.

Furthermore, the present invention especially provides for an immersive visual representation such that a human expert is able to be immersed in a tailor-made 3d virtual world where data is represented visually and dynamically in real-time. This approach enables an optimal perception and understanding of activities inside of the telecommunications network 100, therefore minimizing time and efforts for all kind of observation/troubleshooting activities made by human operators.

Additionally according to the present invention, the machine intelligence entity 170 provides machine learning, especially by means of human-computer interaction, utilizing different approaches from the field of Artificial Intelligence, especially:
-- unsupervised learning approach for predictions, anomaly recognitions and clustering which contributes to problem identification and localization,
-- finite automata based (or state machine-based) models for flow-related verifications,
-- supervised learning through the interaction with human expert during validation and troubleshooting processes, where artificial agents systematically learn from a human,
-- expert system for decision making, based on dynamically updated ontologies (semantical knowledge) containing applicable domain knowledge.

These approaches are inherently updateable/improvable through the interaction with the human expert. However, machine learning in general is gradual process, therefore the quality of machine decisions and proposed resolutions are improved over the time, but they are highly dependent on the human processes from which the knowledge is derived.

Furthermore, the present invention especially provides for an autonomic validation, such that when performing a set of test cases (whether created a priori or generated with the support of this machine intelligence method), network data 140 are used as observable data, and - based on the models of intelligence and expected (learned) data flows - an autonomic agent concludes about success or failure of validation (of the test cases). In both cases additional detailed verification is performed. For the successful case, it is necessary to validate all components of validated element. For the failure case, machine driven root cause analysis results in problem identification, extended by a proposed remedy.

## Claims

1. Method for an autonomic or Al-assisted validation or decision making regarding network performance of a telecommunications network (100) and/or for an autonomic or Al-assisted troubleshooting or performance enhancement within a telecommunications network (100), wherein the telecommunications network (100) comprises a plurality of network nodes (101, 102, 103), interacting, at least partly, with each other,
wherein network data (140) regarding the telecommunications network (100) and/or data derived thereof are collected and stored in a data storage repository (150) and are able to be analyzed, and the network data (140) and/or data derived thereof are able to be visualized using a visualization interface (160),
wherein autonomic or Al-assisted validation or decision making and/or autonomic or Al-assisted troubleshooting or performance enhancement is applied using a machine intelligence entity (170), the machine intelligence entity (170) using at least part of the network data (140) and/or data derived thereof as well as machine learning models (180) to provide an Al-assisted output (190),
wherein the method comprises the following steps:
-- in a first step, the network data (140) and/or data derived thereof are collected and stored in the data storage repository (150), the network data (140) and/or data derived thereof being organized to allow real-time stream processing and/or historical replay,
-- in a second step, the machine intelligence entity (170) is provided with at least a part of the network data (140) and/or data derived thereof, wherein at least
-- a machine learning approach, and
-- a state machine-based approach
are used to realize anomaly recognitions and/or call flow evaluations and/or root cause analysis in case of detected issues within the telecommunications network (100),
wherein by continuously or iteratively performing the first and second step, the Al-assisted output (190) is generated by the machine intelligence entity (170), and wherein the Al-assisted output (190) of the machine intelligence entity (170) comprises information elements being able to be used to validate or to make a decision regarding network performance and/or to troubleshoot or to enhance the performance of the telecommunications network (100), or wherein the Al-assisted output (190) of the machine intelligence entity (170) allows for validating or decision making regarding network performance and/or for troubleshooting or performance enhancement within the telecommunications network (100).

2. Method according to claim 1, wherein the method comprises the further step of visualizing at least part of the network data (140) and/or data derived thereof by means of a graphical representation of a current status or a status at a specific point in time of the telecommunications network (100) or of network nodes (101, 102, 103) thereof, the graphical representation especially including time-series visualization leading up to a current status or a status at a specific point in time of the telecommunications network (100), wherein the graphical representation especially corresponds to an at least three-dimensional representation, and especially visually immersing a human expert in real-time in a current status or a status at a specific point in time of the telecommunications network (100) or of network nodes (101, 102, 103) thereof.

3. Method according to one of the preceding claims, wherein the network data (140) and/or data derived thereof are organized such that real-time stream processing is able to be performed using efficient data pipeline combined with multi-layer storage for quick retrieval and batch processing, especially iteratively optimized based on retrieval pattern,
wherein the network data (140) and/or data derived thereof especially comprise one or a plurality out of the following:
-- at least part of the messages exchanged between the network nodes (101, 102, 103) of the telecommunications network (100),
-- data derived from such exchanged messages according to various different types of messages within the telecommunications network (100) and their subsets based on at least part of the content, especially providing:
-- indications regarding the number of such messages per time interval,
-- delta time measurement between progressing messages in the flow and/or messages belonging to the same request/response process,
-- audio quality indicators, especially jitter, delay and quality of media
-- call flow evaluation data, especially obtained using a state-machine model regarding the processing of a call within the telecommunications network (100),
-- system log data of at least part of the network nodes (101, 102, 103) of the telecommunications network (100),
-- application log data of at least part of the network nodes (101, 102, 103) of the telecommunications network (100),
-- key performance indicators of at least part of the network nodes (101, 102, 103) of the telecommunications network (100),
-- the message content of descriptions of errors encountered by users.

4. Method according to one of the preceding claims, wherein the network nodes (101, 102, 103) are interacting with each other within the telecommunications network (100), especially to provide communication services to users of the telecommunications network (100), wherein the telecommunications network (100) especially comprises an access network (120) and a core network (130) and/or wherein network nodes (101, 102, 103) especially operate on different layers of the telecommunications network (100).

5. Method according to one of the preceding claims, wherein, in the second step, the machine intelligence entity (170) - besides using a machine learning approach, and a state machine-based approach - uses
-- supervised learning through human interaction, especially in view of performing validation and/or troubleshooting, and/or
-- unsupervised learning for detecting anomalies and/or clustering features and/or,
-- expert system knowledge or expert system information, especially for decision making, based on dynamically updated ontologies or semantic knowledge containing applicable domain knowledge.

6. Method according to one of the preceding claims, wherein by means of the machine intelligence entity (170), an autonomic agent is realized by means of which an autonomic validation is performed, especially root cause analysis in case of failure and/or comprising concluding about the success or the failure of a process or an action within the telecommunications network (100).

7. Telecommunications network (100) for an autonomic or Al-assisted validation or decision making regarding network performance of the telecommunications network (100) and/or for an autonomic or Al-assisted troubleshooting or performance enhancement within the telecommunications network (100), wherein the telecommunications network (100) comprises a plurality of network nodes (101, 102, 103), interacting, at least partly, with each other,
wherein the telecommunications network (100) comprises or is associated with a data storage repository (150) and a machine intelligence entity (170),
wherein network data (140) regarding the telecommunications network (100) and/or
data derived thereof are collected and stored in the data storage repository (150) and the network data (140) and are able to be analyzed, and/or data derived thereof are able to be visualized using a visualization interface (160),
wherein autonomic or Al-assisted validation or decision making and/or autonomic or Al-assisted troubleshooting or performance enhancement is applied using the machine intelligence entity (170), the machine intelligence entity (170) using at least part of the network data (140) and/or data derived thereof as well as machine learning models (180) to provide an Al-assisted output (190),
wherein the telecommunications network (100) is configured such that:
-- the network data (140) and/or data derived thereof are collected and stored in the data storage repository (150), the network data (140) and/or data derived thereof being organized to allow real-time stream processing and/or historical replay,
-- the machine intelligence entity (170) is provided with at least a part of the network data (140) and/or data derived thereof, wherein at least
-- a machine learning approach, and
-- a state machine-based approach
are used to realize anomaly recognitions and/or call flow evaluations and/or root cause analysis in case of detected issues within the telecommunications network (100),
wherein the telecommunications network (100) is furthermore configured such that by continuously or iteratively collecting and storing the network data (140) and/or data derived thereof in the data storage repository (150) and providing the machine intelligence entity (170) with at least a part of the network data (140) and/or data derived thereof, the Al-assisted output (190) is generated by the machine intelligence entity (170), and
wherein the Al-assisted output (190) of the machine intelligence entity (170) comprises information elements being able to be used to validate or to make a decision regarding network performance and/or to troubleshoot or to enhance the performance of the telecommunications network (100), or wherein the Al-assisted output (190) of the machine intelligence entity (170) allows for validating or decision making regarding network performance and/or for troubleshooting or performance enhancement within the telecommunications network (100).

8. System for an autonomic or Al-assisted validation or decision making regarding network performance of a telecommunications network (100) and/or for an autonomic or Al-assisted troubleshooting or performance enhancement within a telecommunications network (100), wherein the system comprises the telecommunications network (100) and the telecommunications network (100) comprises a plurality of network nodes (101, 102, 103), interacting, at least partly, with each other,
wherein the system comprises a data storage repository (150) and a machine intelligence entity (170),
wherein network data (140) regarding the telecommunications network (100) and/or data derived thereof are collected and stored in the data storage repository (150) and the network data (140) and are able to be analyzed, and/or data derived thereof are able to be visualized using a visualization interface (160),
wherein autonomic or Al-assisted validation or decision making and/or autonomic or Al-assisted troubleshooting or performance enhancement is applied using the machine intelligence entity (170), the machine intelligence entity (170) using at least part of the network data (140) and/or data derived thereof as well as machine learning models (180) to provide an Al-assisted output (190),
wherein the system is configured such that:
-- the network data (140) and/or data derived thereof are collected and stored in the data storage repository (150), the network data (140) and/or data derived thereof being organized to allow real-time stream processing and/or historical replay,
-- the machine intelligence entity (170) is provided with at least a part of the network data (140) and/or data derived thereof, wherein at least
-- a machine learning approach, and
-- a state machine-based approach
are used to realize anomaly recognitions and/or call flow evaluations and/or root cause analysis in case of detected issues within the telecommunications network (100),
wherein the system is furthermore configured such that by continuously or iteratively collecting and storing the network data (140) and/or data derived thereof in the data storage repository (150) and providing the machine intelligence entity (170) with at least a part of the network data (140) and/or data derived thereof, the Al-assisted output (190) is generated by the machine intelligence entity (170), and
wherein the Al-assisted output (190) of the machine intelligence entity (170) comprises information elements being able to be used to validate or to make a decision regarding network performance and/or to troubleshoot or to enhance the performance of the telecommunications network (100), or wherein the Al-assisted output (190) of the machine intelligence entity (170) allows for validating or decision making regarding network performance and/or for troubleshooting or performance enhancement within the telecommunications network (100).

9. Telecommunications network (100) according to claim 7 or system according to claim 8, wherein the telecommunications network (100) or the system comprises a visualization interface (160), wherein the visualization interface (160) is configured such that the network data (140) and/or data derived thereof are visualized by means of a graphical representation of a current status or a status at a specific point in time of the telecommunications network (100) or of network nodes (101, 102, 103) thereof, the graphical representation especially including time-series visualization leading up to a current status or a status at a specific point in time of the telecommunications network (100), wherein the graphical representation especially corresponds to an at least three-dimensional representation, and especially visually immersing a human expert in real-time in a current status or a status at a specific point in time of the telecommunications network (100) or of network nodes (101, 102, 103) thereof.

10. Machine intelligence entity (170) used in a telecommunications network (100) or in a system according to one of claims 7 to 9.

11. Visualization interface (160) used in a telecommunications network (100) or in a system according to one of claims 7 to 9.

12. Computer program comprising a computer readable program code which, when executed on a computer or on one network node (101, 102, 103) or a plurality of network nodes (101, 102, 103) of a telecommunications network (100) or on a machine intelligence entity (170) or in part on one or a plurality of network nodes (101, 102, 103) of a telecommunications network (100) and in part on a machine intelligence entity (170), causes the computer or the network node (101, 102, 103) or network nodes (101, 102, 103) or the machine intelligence entity (170) to perform a method according one of claims 1 to 6.

13. Computer-readable medium comprising instructions which when executed on a computer or on one network node (101, 102, 103) or a plurality of network nodes (101, 102, 103) of a telecommunications network (100) or on a machine intelligence entity (170) or in part on one or a plurality of network nodes (101, 102, 103) of a telecommunications network (100) and in part on a machine intelligence entity (170), causes the computer or the network node (101, 102, 103) or network nodes (101, 102, 103) or the machine intelligence entity (170) to perform a method according to one of claims 1 to 6.
